# EUROPEAN PATENT APPLICATION

(11) **EP 2 660 681 A2**
(43) Date of publication of application: **06.11.2013**
(21) Application number: 13165004.6
(22) Date of filing: 23.04.2013
(51) Int. Cl.: G06F 3/01

(54) **Mobile terminal and control method thereof**

(30) Priority: 02.05.2012 KR 20120046192
(71) Applicant: LG ELECTRONICS INC., Yeongdeungpo-Gu Seoul 150-721 (KR)
(72) Inventor: Na, Sungchae, 153-801 SEOUL (KR); Jeon, Taeyoung, 153-801 SEOUL (KR)
(74) Representative: Cabinet Plasseraud

(57) **Abstract**

A mobile terminal including a camera configured to capture at least first and second eye gestures of a user using the mobile terminal; a display; and a controller configured to display on the display an eye tracking mode guide based on the captured first captured eye gesture and to select a particular function included in the eye tracking mode guide based on the captured second eye gesture.

## Description

### CROSS-REFERENCE TO RELATED APPLICATIONS

This application claims the benefit of earlier filing date and right of priority to Korean Patent Application No. 10-2012-0046192, filed on 02 May, 2012, the contents of which are incorporated by reference herein in their entirety.

### BACKGROUND OF THE INVENTION

**Field of the Invention**

The present invention relates to a mobile terminal and more particularly, a mobile terminal and a control method of the terminal for effectively controlling the mobile terminal according to a gesture type of the user's eye.

**Discussion of the Related Art**

As functions of terminals such as personal computers, laptop computers, cellular phones diversify, the terminals become multimedia players having multiple functions for capturing pictures or moving images, playing music, moving image files and games and receiving broadcasting programs.

Terminals can be categorized as mobile terminals and stationary terminals. The mobile terminals can be further comprised of handheld terminals and vehicle mount terminals according to whether users can personally carry the terminals. Conventional terminals including mobile terminals provide an increasing number of complex and various functions.

To support and enhance the increasing number of functions in a terminal, improving a structural part and/or a software part of the terminal would be desirable.

Furthermore, various methods for controlling mobile terminals based on the user's eye gesture are under development.

### SUMMARY OF THE INVENTION

Accordingly, one objective of the present invention is to provide a mobile terminal and a control method of the terminal for effectively controlling the mobile terminal according to a gesture type of the user's eye.

To achieve these and other objective embodiments, the present invention provides a mobile terminal including a camera configured to capture at least first and second eye gestures of a user using the mobile terminal; a display; and a controller configured to display on the display an eye tracking mode guide based on the captures first captures eye gesture, and to select a particular function included in the eye tracking mode guide based on the captured eye gesture.

In another aspect, the present invention provides a method of controlling a mobile terminal, the method comprising capturing, via a camera of the mobile terminal, at least first and second eye gestures of a user using the mobile terminal; displaying, via a display of the mobile terminal, an eye tracking mode guide based on the captured first captured eye gesture; selecting, via a controller of the mobile terminal, a particular function included in the eye tracking mode guide based on the captured second eye gesture.

**BRIEF DESCRIPTION OF THE DRAWINGS**

The accompanying drawings, which are included to provide a further understanding of the invention and are incorporated in and constitute a part of this application, illustrate embodiment(s) of the invention and together with the description serve to explain the principle of the invention.

FIG. 1 is a block diagram of a mobile terminal according to an embodiment;

FIG. 2A is a front perspective view of the mobile terminal according to an embodiment;

FIG. 2B is a rear perspective view of the mobile terminal according to an embodiment;

FIG. 3 is a view for explaining a proximity depth of a proximity sensor;

FIG. 4 is an example of a mobile terminal of FIG. 1;

FIG. 5 is a flowchart illustrating operation of a mobile terminal of FIG. 1;

FIGS. 6 and 7 illustrate a process of eye tracking in a mobile terminal of FIG. 5;

FIGS. 8 and 9 illustrate a procedure of calculating a gaze direction of the user in a mobile terminal of FIG. 5;

FIGS. 10 to 13 illustrate a first and a second gesture by using the left eye of the user in a mobile terminal of FIG. 5;

FIGS. 14 to 18 illustrate a first and a second gesture by using the right eye of the user in a mobile terminal of FIG. 5; and

FIGS. 19 to 29 illustrate a control process by using various eye gestures in a mobile terminal of FIG. 5.

### DETAILED DESCRIPTION OF THE INVENTION

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on.

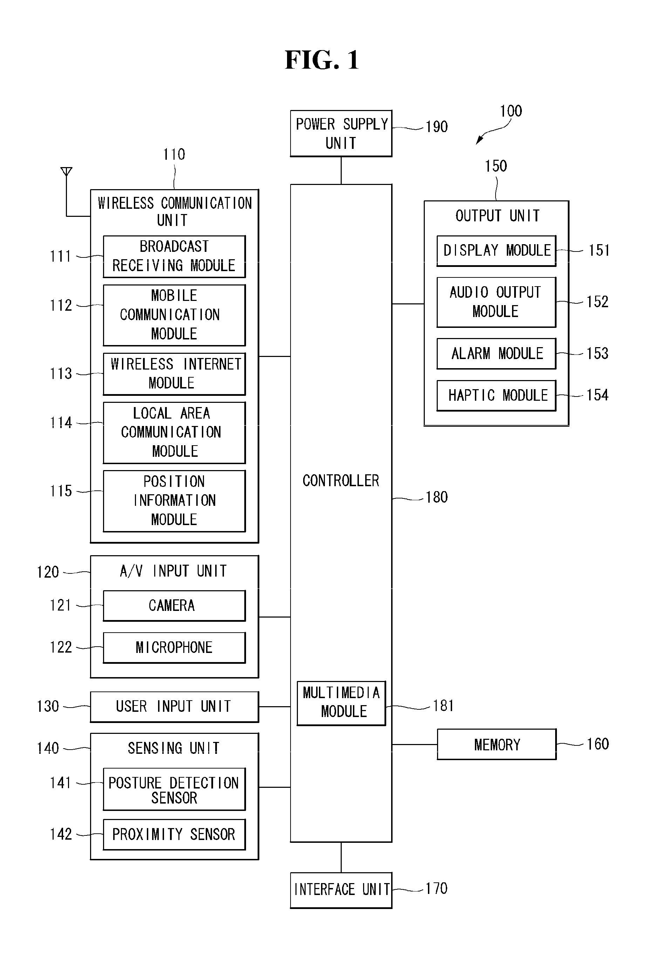

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141. The sensing unit 140 may sense a motion of the mobile terminal 100.

The sensing unit 140 also includes a posture detection sensor 142 that can detect a facial and/or eye movement or change of a user operating the terminal 100 via the camera 121.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body of the mobile terminal 100 through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 may be located in an internal region of the mobile terminal 100 surrounded by the touch screen and/or near the touch screen. The proximity sensor 141 may sense an object approaching a predetermined sensing face or an object located near the proximity sensor 141 using an electromagnetic force or infrared rays without having mechanical contact. The proximity sensor 141 has a lifetime longer than a contact sensor and thus has a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 controls overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to a hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to a software implementation, embodiments such as procedures or functions may be implemented with a separate software module that executes at least one function or operation. Software codes may be implemented according to a software application written in an appropriate software language. The software codes may be stored in the memory 160 and executed by the controller 180.

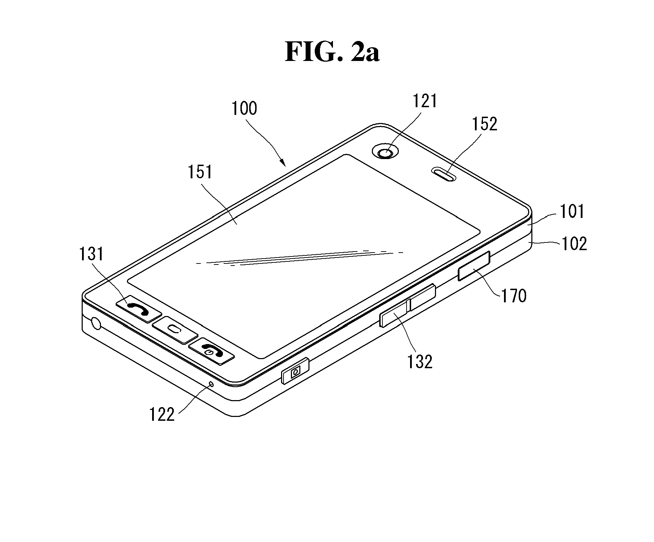

FIG. 2a is a front perspective view of a mobile terminal (or a handheld terminal) according to an embodiment of the present invention. The mobile terminal 100 may be a bar type terminal body. However, embodiments are not limited to a bar type terminal and may be applied to terminals of various types including slide type, folder type, swing type and/or swivel type terminals having at least two bodies that are relatively movably combined.

The terminal body may include a case (a casing, a housing, a cover, etc.) that forms an exterior of the mobile terminal 100. In this embodiment, the case may be divided into a front case 101 and a rear case 102. Various electronic components may be arranged in the space formed between the front case 101 and the rear case 102. At least one middle case may be additionally provided between the front case 101 and the rear case 102. The cases may be formed of plastics through injection molding or made of a metal material such as stainless steel (STS) or titanium (Ti).

The display 151, the audio output unit 152, the camera 121, the user input unit 130/131 and 132, the microphone 122 and the interface 170 may be arranged or provided in the terminal body, and more specifically may be arranged or provided in the front case 101.

The display 151 may occupy most of the main face of the front case 101. The audio output unit 152 and the camera 121 may be arranged in a region in proximity to one of both ends of the display 151 and the user input unit 131, and the microphone 122 may be located in a region in proximity to another end of the display 151. The user input unit 132 and the interface 170 may be arranged or provided on sides of the front case 101 and the rear case 102.

The user input unit 130 may receive commands for controlling operation of the mobile terminal 100, and may include a plurality of operating units 131 and 132. The operating units 131 and 132 may be referred to as manipulating portions and may employ any tactile manner in which a user operates the operating units 131 and 132 while having tactile feeling.

The first and second operating units 131 and 132 may receive various inputs. For example, the first operating unit 131 may receive commands such as start, end and scroll and the second operating unit 132 may receive commands such as control of a volume of sound output from the audio output unit 152 or conversion of the display 151 to a touch recognition mode.

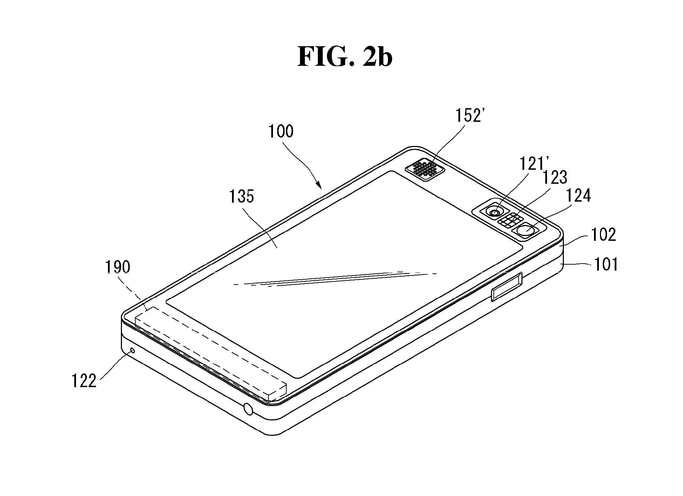

FIG. 2b is a rear perspective view of the mobile terminal shown in FIG. 2a according to an embodiment of the present invention. Referring to FIG. 2b, a camera 121' may be additionally attached to the rear side of the terminal body i.e., the rear case 102. The camera 121' may have a photographing direction opposite to that of the camera 121 shown in FIG. 2a and may have pixels different from those of the camera 121.

For example, it may be desirable that the camera 121 has low pixels such that the camera 121 may capture an image of a face of a user and transmit the image to a receiving part in case of video telephony while the camera 121' has high pixels because the camera 121' captures an image of a general object and does not immediately transmit the image in many cases. The cameras 121 and 121' may be attached or provided to the terminal body such that the cameras 121 and 121' may rotate or pop-up.

A flash bulb 123 and a mirror 124 may be additionally provided in proximity to the camera 121'. The flash bulb 123 may light an object when the camera 121' takes a picture of the object. The mirror 124 may be used for the user to look at his/her face in the mirror when the user wants to self-photograph himself/herself using the camera 121'.

An audio output unit 152' may be additionally provided on the rear side of the terminal body. The audio output unit 152' may achieve a stereo function with the audio output unit 152 (shown in FIG. 2a) and may be used for a speaker phone mode when the terminal is used for a telephone call.

A broadcasting signal receiving antenna may be additionally attached or provided to the side of the terminal body in addition to an antenna for telephone calls. The antenna constructing a part of the broadcasting receiving module 111 shown in FIG. 1 may be set in the terminal body such that the antenna may be pulled out of the terminal body.

The power supply 190 for providing power to the mobile terminal 100 may be set in the terminal body. The power supply 190 may be included in the terminal body or may be detachably attached to the terminal body.

A touch pad 135 for sensing touch may be attached to the rear case 102. The touch pad 135 may be of a light transmission type, such as the display 151. In this example, if the display 151 outputs visual information through both sides thereof, the visual information may be recognized or determined by the touch pad 135. The information output through both sides of the display 151 may be controlled by the touch pad 135. Otherwise, a display may be additionally attached or provided to the touch pad 135 such that a touch screen may be arranged or provided even in the rear case 102.

The touch pad 135 may operate in connection with the display 151 of the front case 101. The touch pad 135 may be located in parallel with the display 151 behind the display 151. The touch panel 135 may be identical to or smaller than the display 151 in size.

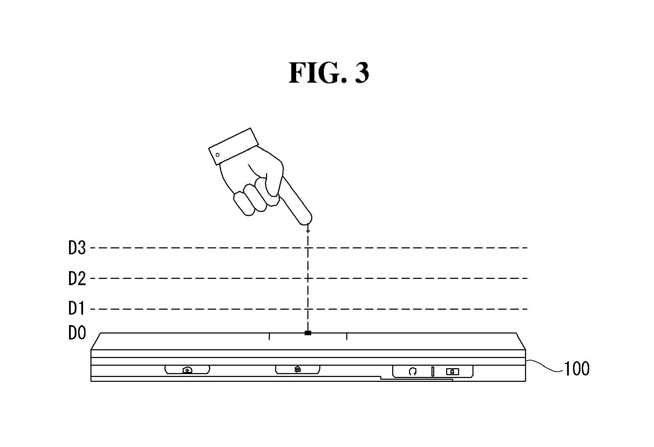

FIG. 3 is a view for explaining a proximity depth of a proximity sensor. As shown in FIG. 3, when a pointer (such as a user's finger) approaches the touch screen, the proximity sensor located inside or near the touch screen may sense the approach of the pointer, and may output a proximity signal.

The proximity sensor may be constructed such that the proximity sensor outputs a proximity signal according to a distance between the pointer approaching the touch screen and the touch screen (referred to as "proximity depth").

The distance in which the proximity signal is output when the pointer approaches the touch screen may be referred to as a detection distance. The proximity depth may be determined by using a plurality of proximity sensors having different detection distances and by comparing proximity signals respectively output from the proximity sensors.

FIG. 3 shows a section of the touch screen in which proximity sensors capable of sensing three proximity depths may be provided. Proximity sensors capable of sensing less than three or more than four proximity depths may be provided in the touch screen.

More specifically, when the pointer completely contacts the touch screen D0, it may be recognized as contact touch. When the pointer is located within a distance D1 from the touch screen, it may be recognized as a proximity touch of a first proximity depth. When the pointer is located in a range between the distance D1 and a distance D2 from the touch screen, it may be recognized as a proximity touch of a second proximity depth. When the pointer is located in a range between the distance D2 and a distance D3 from the touch screen, it may be recognized as a proximity touch of a third proximity depth. When the pointer is located greater than the distance D3 from the touch screen, it may be recognized as cancellation of the proximity touch.

Accordingly, the controller 180 may recognize the proximity touch as various input signals according to proximity distance and proximity position of the pointer with respect to the touch screen, and the controller 810 may perform various operation controls according to the input signals.

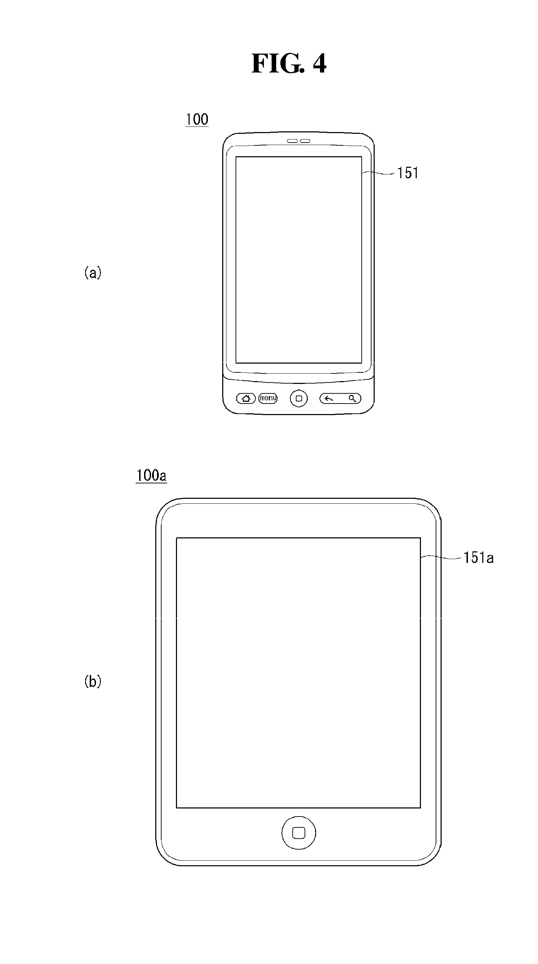

FIG. 4 is an example of a mobile terminal of FIG. 1. As shown in FIG. 4, the present invention can be applied to various kinds of mobile terminals 100, 100a.

As shown in FIG. 4(a), the mobile terminal 100 contains a standard display 151. For example, the present invention may be applied to the mobile terminal 100 that can be grabbed by one hand and whose display 151 can be touched by the same grabbing hand.

As shown in FIG. 4(b), the mobile terminal 100a may include a larger display 151a. For example, the present invention may be applied to the mobile terminal 100a such as a notebook, notepad, book or reader, etc..

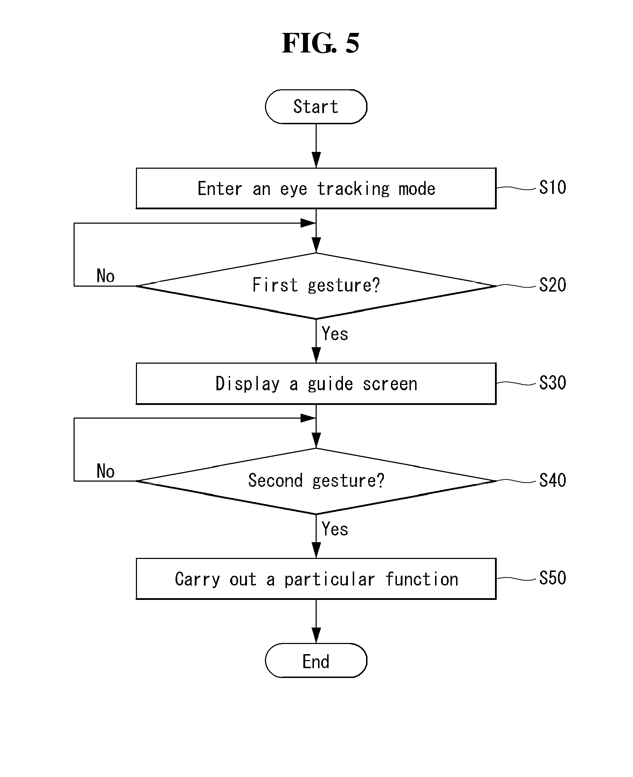

Next, FIG. 5 is a flowchart illustrating operation of a mobile terminal of FIG. 1. As shown in FIG. 5, the controller 180 according to one embodiment of the present invention enters an eye-tracking mode (S10).

The eye tracking corresponds to a mode operating the mobile terminal 100 based on a gesture of the user's eye. In other words, eye tracking may correspond to a mode operating the mobile terminal 100 according to the information of a gaze direction of the user's eye based on the eye image of the user captured through the camera 121. A method of obtaining a gaze direction of the user's eye through the camera 121 will be described in detail later.

The eye tracking mode may be performed based on the user's operation and/or the controller's 180 control signal. For example, the user can request the mobile terminal 100 perform the eye tracking mode through touch operation against the mobile terminal 100.

Further, the controller 180 can automatically perform the eye tracking mode when an outside temperature is below a predetermined value. For example, if a current ambient temperature is minus 10 degrees, a direct touch motion on the display 151 will not be easy and thus the touch mode can be automatically switched to the eye tracking mode. Similarly, the controller 180 can switch to the eye tracking mode by taking into account current weather conditions such as rainfall. In other words, since a touch motion is not easily preformed on a rainy day, the touch mode can be automatically switched to the eye tracking mode. Also, the controller 180 can switch to the eye tracking mode based on conditions resulting from the type of application in execution.

The controller 180 can also switch between the eye tracking mode and the touch mode if predetermined conditions are met. For example, if the user is operating the mobile terminal 100 in an outdoor environment, the mobile terminal 100 can be switched to the eye tracking mode, while the mobile terminal 100 can be switched again to the touch mode when the mobile terminal 100 moves inside an indoor environment.

Further, when the mobile terminal 100 has entered the eye tracking mode, the controller 180 determines whether a first gesture through the eye has been obtained (S20) and displays a guide screen in response to the first gesture (S30).

In addition, first gesture is a valid gesture input by the user through tracking of a gaze direction of the user's eye since initiation of the eye tracking mode. Once the eye tracking mode has started, the controller 180 attempts to obtain information about the position and gaze direction of the user's eye from a face image of the user captured through the camera 121 and using the posture detection sensor 142.

Further, the first gesture may be a gesture such as a blink. For example, if the user blinks his or her left or right eye, the controller 180 (tracking valid gestures of the user's eye after entering the eye tracking mode) determines the blinking motion as the first gesture.

If the first gesture is input, the controller 180 can display a guide screen. In other words, if the controller 180 recognizes a valid eye gesture made by the user for the first time and the user makes a particular eye gesture related to the first eye gesture, the controller 180 notifies the user of the fact that the controller 180 will perform a function corresponding to the second eye gesture.

The guide screen may contain icons, images, graphs, tables, diagrams, and so on. For example, an icon may be displayed at a position corresponding to a gaze direction at the time the first gesture is input. If an icon is displayed at the position corresponding to the gaze direction, the user can easily figure out which direction he or she has to move his or her gaze direction with respect to the icon for selecting a desired menu. Moreover, by displaying related functions which can be performed after the first gesture on the guide screen, the user can easily select a subsequent function. For example, an icon may be displayed at the center of an area corresponding to the gaze direction and arrows may be displayed showing directions allowed around the center point.

The controller 180 then determines whether a second gesture through the eye has been obtained (S40) and displays a guide screen in response to the second gesture (S50). Further, the second gesture may correspond to a gesture performed continuously with the first gesture which makes a guide screen displayed or an eye gesture performed within a predetermined time period after the first gesture is performed. For example, after performing the first gesture of blinking the eye deliberately, a second gesture which moves the user's gaze direction along a particular direction may be performed continuously or within a predetermined time period. On the other hand, the second gesture may correspond to an eye gesture performed while at least part of a guide screen is being displayed after the guide screen is displayed due to the first gesture.

When the second gesture is performed, the controller 180 performs a function corresponding to the gesture. For example, the controller 180 can scroll along a display may be scrolled along a gaze direction of the user or a menu at the position corresponding to the gaze direction of the user may be selected.

An operation due to the second gesture may, vary according to an application currently in execution. For example, if a web page is displayed, scrolling of the web page may be performed, whereas, if an image is displayed, the image may be rotated.

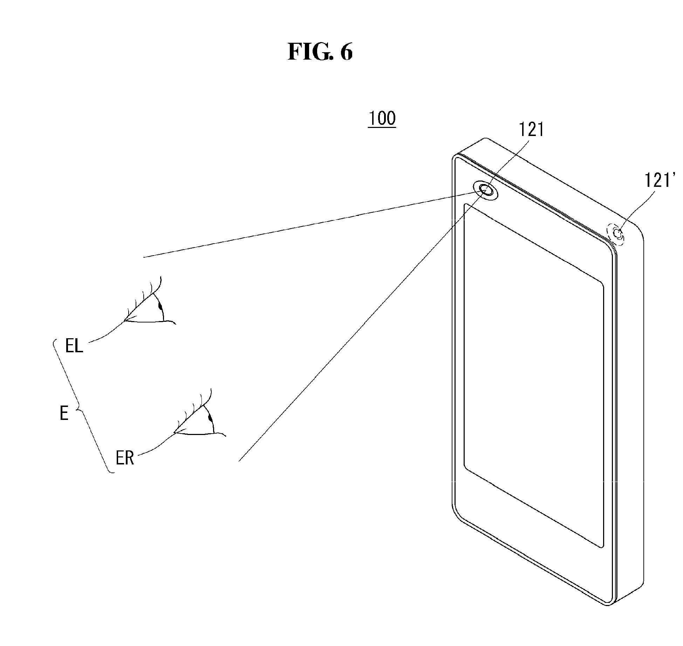

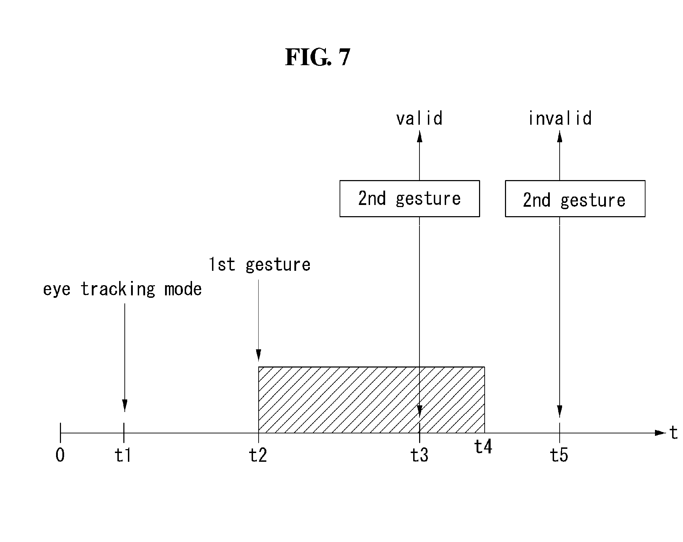

Next, FIGS. 6 and 7 illustrate a process of eye tracking in a mobile terminal of FIG. 5. As shown in the figures, the controller 180 performs an operation corresponding to the user's eye (E) gesture.

As shown in the FIG. 6, first and second cameras 121, 121are disposed on different sides of the mobile terminal 100. In particular, the first camera 121 captures an image toward the user of the mobile terminal 100, whereas the second camera 121' captures an image in the opposite direction.

The controller 180 can extract an eye (E) image of the user from the image captured through the first camera 121. For example, suppose an object with an approximately circular shape corresponds to a face. Then the left eye (EL) and the right eye (ER) can be identified as relatively dark areas at positions showing bilateral symmetry in the face. Furthermore, the controller 180 can determined a gaze direction of the user by tacking the dark pupil in the eye image.

As shown in FIG. 7, the second gesture corresponds to an eye gesture performed within a predetermined time duration after the first gesture is performed. In more detail, at t1, the eye tracking mode may be initiated. In other words, the controller 180 enters a mode where the mobile terminal 100 can be controlled by using the user's eye rather than a direct touch input on the mobile terminal 100.

Further, as shown in FIG. 7, a first gesture is performed at t2. Then, at time t2, the controller 180 observing the eye image of the user in the eye tracking mode perceives that the user intends to perform a particular operation. As discussed above, first gesture may correspond to the user blinking both eyes or blinking one eye. If the first gesture is performed, the controller 180 displays a guide screen on the display 151.

A second gesture is then performed at t3. The second gesture may correspond to an eye gesture moving a gaze direction along a predetermined direction. Further, the t3 may be a time point within a predetermined time range from the t1. For example, the t3 may be a particular time point from t2 to t4. If the controller 180 determines the second gesture is a gesture made within a predetermined time period after the first gesture is performed, the controller 180 determines the second gesture to be valid and performs a function corresponding to the second gesture.

When the time becomes t4, the controller 180 can reset the effect caused by performing the first gesture previously determined. In other words, at the time of t4, the guide screen displayed based on the first gesture can be removed.

If the second gesture is performed at t5 beyond t4, the controller 180 determines that the second gesture is not valid. In other words, the second gesture performed at t3 and t5 may be the same gesture and the controller 180 ignores the gesture developed at t5. Therefore, the user can perform a subsequent eye gesture within a predetermined time period after the first gesture is made. Also, the guide screen can be removed if the first gesture is performed one more time or a reset function triggered by touching a guide area or the remaining area of the guide area is performed.

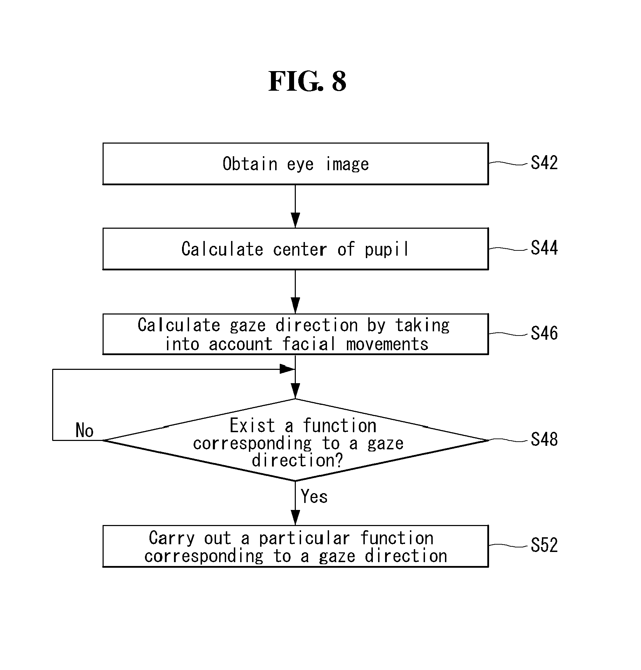

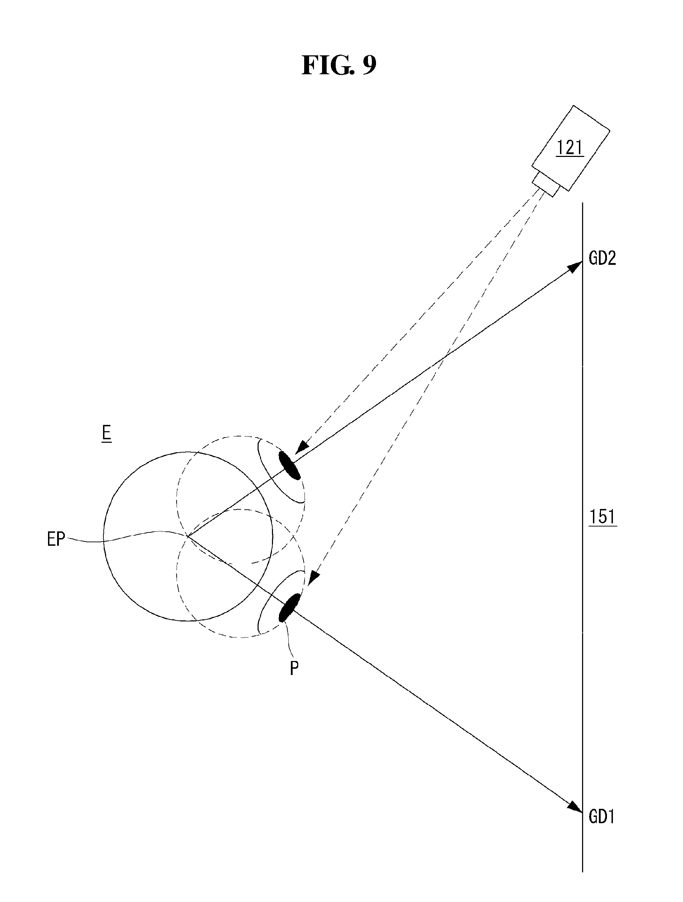

Next, FIGS. 8 and 9 illustrate a procedure of calculating a gaze direction of the user in a mobile terminal of FIG. 5. As shown in the figures, the controller 180 calculates a gaze direction of the user's eye from a capture image.

As shown in FIG. 8, the controller 180 according to one embodiment of the present invention obtains the eye image of the user (S42). As discussed above, the eye image can be captured through the camera 121. For example, the eye image of the user who operates the mobile terminal 100 can be obtained through the camera 121 disposed at one position of the front surface of the mobile terminal 100.

In general, the user operating the mobile terminal 100 gazes at the display 151 disposed on the front surface of the mobile terminal 100. Therefore, the face image of the user can be captured through the camera 121 on the front surface. The controller 180 can then extract the eye region from the face image captured.

Next, the controller 180 calculates the center of the pupil (S44). In particular, the pupil is the circular region of the eye, located in the center of the eye surrounded by an iris. The pupil is also darker compared with other parts of the eye or has a different color characteristic than other parts of the eye. That is, because of the different color characteristics of the eye, the controller 180 can calculate the center of the eye and calculate a movement of the eye.

Further, the gaze direction of the user is highly related to the pupil. For example, an area which the user is viewing with an interest actually corresponds to the direction along which the center of the pupil is pointed. The center of the pupil is located in the center of the eye image captured and can be extracted based on its relatively dark shape and/or color characteristics. For example, the center position of a pupil image of circular shape may be determined as the center of the pupil.

Next, the controller 180 calculates a gaze direction by taking account of the user's facial movement (S46). The facial movement is used to calculate the gaze direction of the user along with the center position of the pupil. For example, even if the user faces forward without any movement of their pupil, the user's gaze direction may change as the user moves his or her head in left and right directions.

In addition, the facial movement can be detected through the face image of the user captured by the camera 121. The controller 180 can then extract the looking direction of the face based on characteristic elements such as forehead, eyes, nose, mouth, and ears in the face image.

Based on the facial movement and center position of the pupil calculated, the controller 180 can estimate the gaze direction. For example, the controller 180 can determine which part of the display 151 the user is currently viewing. For the convenience of understanding, the description of the present invention is provided based on the gaze direction. However, the gaze direction may include a looking direction of the user's face based on the motion of the user's head.

As shown in FIG. 8, the controller 180 determines whether a function corresponding to a gaze direction exists (S48) and performs a particular function corresponding to the gaze direction (S52). When a gaze direction is calculated and a function corresponding to the gaze direction exist (yes in S48), the controller 180 performs the function. For example, when the gaze direction of the user moves to an upper direction from a current center point and a scroll function along that direction exists, the controller 180 performs a scrolling function along that direction can be performed. As discussed previously, the user can recognize the existence of a particular function corresponding to the gaze direction through a guide screen displayed by the first gesture.

As shown in FIG. 9, the controller 180 can obtain a gaze direction of the user from the image captured through the camera 121. As shown, the start point of a gaze direction can be the center point EP of the eyeball. In other words, the gaze direction can be determined by a gaze vector GD1, GD2 starting from the center EP of the eyeball and passing through the center P of the pupil.

If the user moves their gaze direction, the center P of his or her pupil also moves accordingly. In this instance, if there is no facial movement of the user, only the center P of the user's pupil moves while the center EP of the eyeball remains fixed. If the center P of the user's pupil moves, the gaze vector GD1, GD2 moves from a first gaze vector GD1 to a second gaze vector GD2.

If the user makes a facial movement, the center EP of the eyeball and the center P of the user's pupil move simultaneously. Therefore, the controller 180 can obtain a gaze direction based on the user's facial movement and/or the movement of the center of the user's pupil obtained through the camera 121.

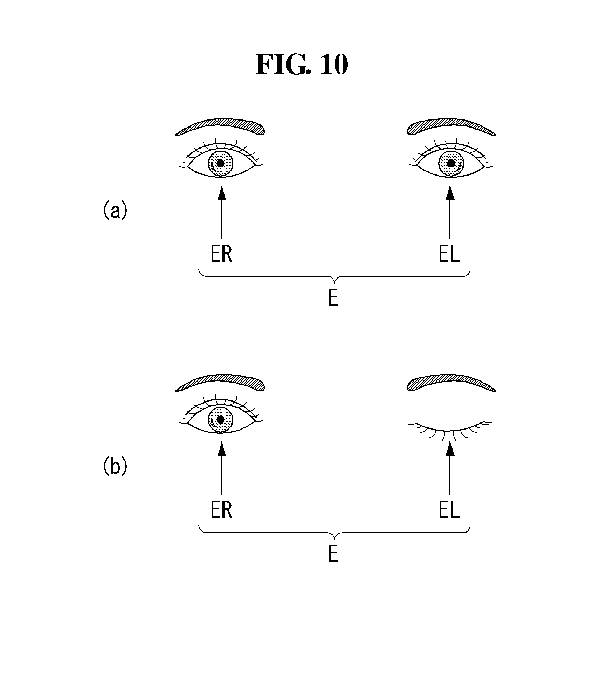

Next, FIGS. 10 to 13 illustrate a first and a second gesture by using the left eye of the user in a mobile terminal of FIG. 5. In this example, the controller 180 generates a control signal based on an eye gesture.

As shown in FIG. 10(a), the camera 121 captures the image of the user's eye (E). For example, based on the characteristics of eyes (E) located symmetrically in the face, the left EL and the right eye ER can be identified.

As shown in FIG. 10(b), the controller 180 can determine whether the user has made an eye gesture based on the captured images of the left EL and the right eye ER. For example, the controller 180 can detect that the user has made an eye gesture of blinking his or her left eye EL.

In the eye tracking mode in which the controller 180 analyzes the eye image of the user and waits for the user's command, if a valid eye gesture is received from the user, the controller 180 determines the eye gesture as a first gesture.

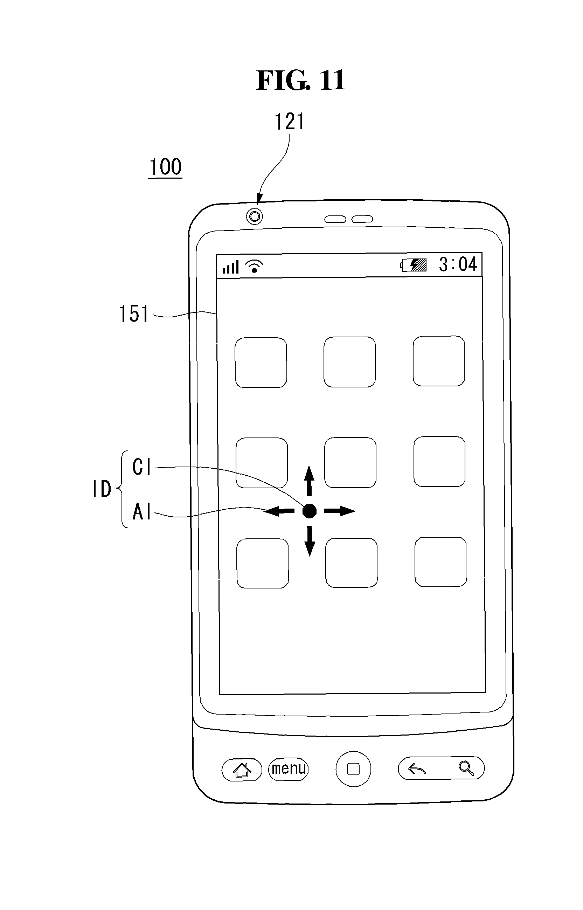

With reference to FIG. 11, if the controller 180 receives the first gesture of the user, the controller 180 display a guide screen ID. The guide screen ID contains a center icon CI and a directional icon AI.

In particular, the center icon CI displays a gaze direction at that position. In other words, while the guide screen ID is displayed, the guide screen indicates that the user is viewing the position at which the center icon CI is displayed. Because the center icon CI is displayed, the user can perform a second gesture subsequent to the current eye gesture more clearly.

The directional icon AI guides a subsequent gesture made by the user. For example, the directional icon indicates a direction the user has to move his or her gaze direction from a current viewing position to perform desired operation. In other words, the directional guide may correspond to an icon guiding which second gesture has to be made in association with the previously entered first gesture.

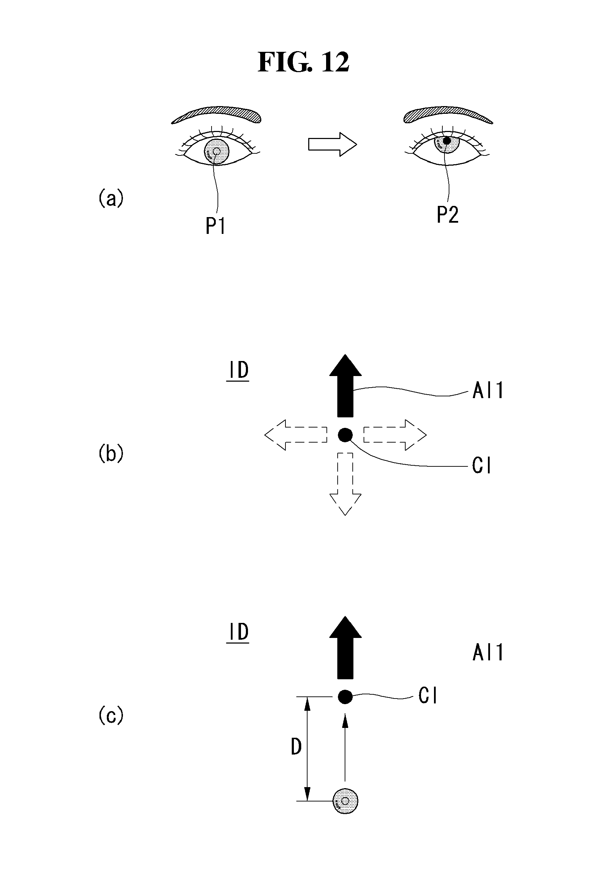

As shown in FIG. 12(a), the user can move the center of their pupil (P of FIG. 9). That is, by observing along an upper direction, the center of the pupil can be moved from a first position P1 to a second position P2. The controller 180 can detect if the center of the pupil has moved by analyzing the image captured through the camera 121. A gesture moving the center of the pupil along an upper direction may correspond to a second gesture. In other words, subsequent to a first gesture blinking the left eye EL, a second gesture selecting a particular function, which is selected by the first gesture and is in a waiting state, can be performed.

As shown in FIG. 12(b), if the user watches an upper side, the controller 180 can perform a function corresponding to the guide screen ID. For example, a function corresponding to a first directional icon AI1 located in the upper side of the center icon CI can be performed. At this time, the first directional icon AI1 may correspond to a function moving along that direction like scrolling the screen or a mouse pointer.

As shown in FIG. 12(c), the controller 180 can perform a function corresponding to a first directional icon AI1. As the function corresponding to the first directional icon AI1 is performed, the guide screen ID moves by D in an upper direction.

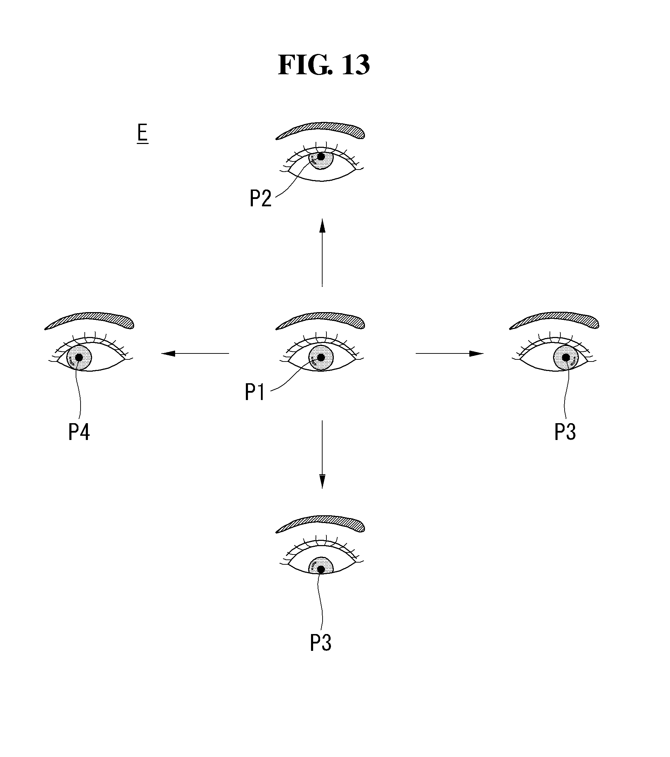

As shown in FIG. 13, the user can move the center of the pupil to a first to fourth position (P1 to P4). The first to fourth position P1 to P4 may correspond to individual directions of directional icons AI of FIG. 11. The controller 180 can perform a function corresponding to the gesture if an eye gesture corresponding to each direction of the directional icon AI is received.

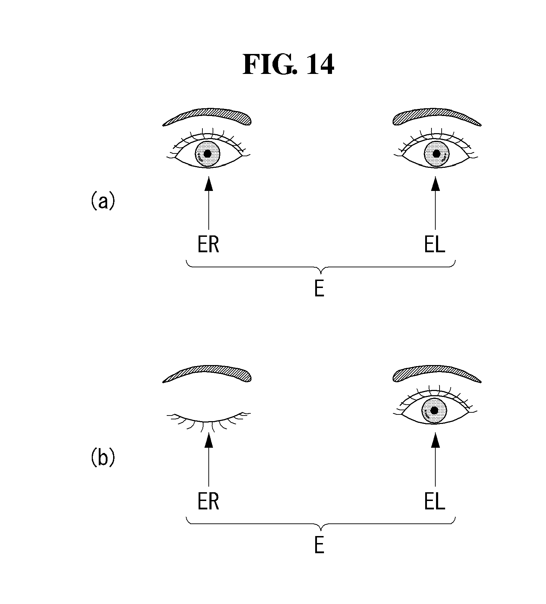

Next, FIGS. 14 to 18 illustrate a first and a second gesture using the right eye of the user in a mobile terminal of FIG. 5. As shown in FIG. 14(a), the camera 121 can capture the image of the user's eyes (E). For example, based on the characteristics of eyes (E) located symmetrically in the face, the left EL and the right eye ER can be identified.

As shown in FIG. 14(b), the controller 180, based on the captured images of the left EL and the right eye ER, can determine whether the user has made an eye gesture. For example, the controller 180 can detect the user has made an eye gesture of blinking his or her right eye ER.

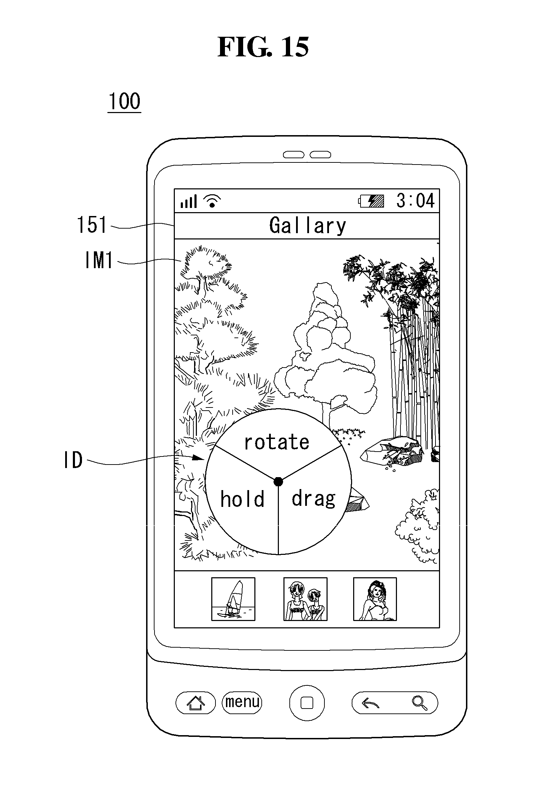

As shown in FIG. 15, if the user makes a first gesture of blinking his or her right eye ER, the controller 180 can display a guide screen ID. Further, when user's blinking his or her right eye ER, the controller 180 can display a guide screen ID different from when the user blinks his or her left eye EL. For example, a function selected through a second gesture can be displayed through the guide screen ID.

The guide screen ID displayed by the gesture of the right eye ER may have the form whose inner circular region is confined to a predetermined area. Each area may correspond to a function of rotation, hold, or dragging motion.

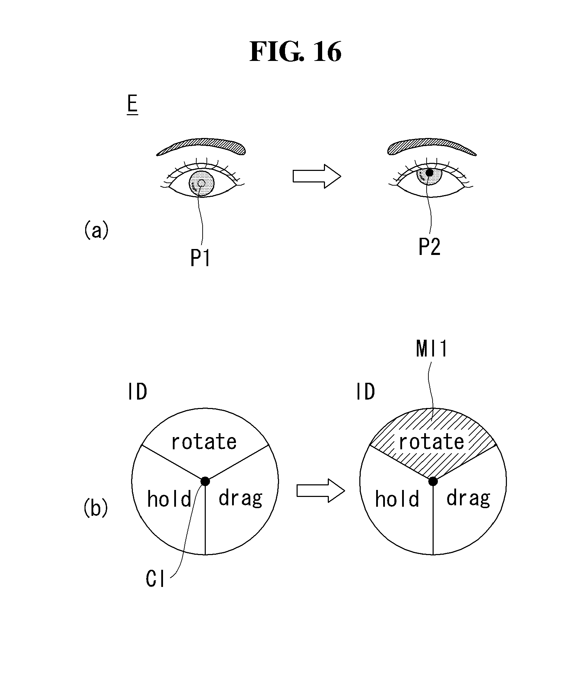

As shown in FIG. 16(a), the user can move the center of their pupil P from a first position P1 to a second position P2 by observing along an upper direction. The controller 180 can detect the center of the pupil P has moved by analyzing the image captured through the camera 121. A gesture moving the center P of the pupil along an upper direction may correspond to a second gesture. In other words, subsequent to a first gesture blinking the right eye ER, a second gesture selecting a particular function, which is selected by the first gesture and is in a waiting state, can be performed.

As shown in FIG. 16(b), if the user moves the center of the pupil P toward an upper side, the controller 180 can generate a control signal for selecting a particular menu of the guide screen ID. If a particular menu of the guide screen ID is selected, the controller 180 can activate a function corresponding to the selected menu. For example, if the gaze direction of the user is moved toward a first menu direction MI1 related to a rotation function, the controller 180 informs the user of the corresponding menu has been selected by highlighting the first menu MI1 and then performs the corresponding function.

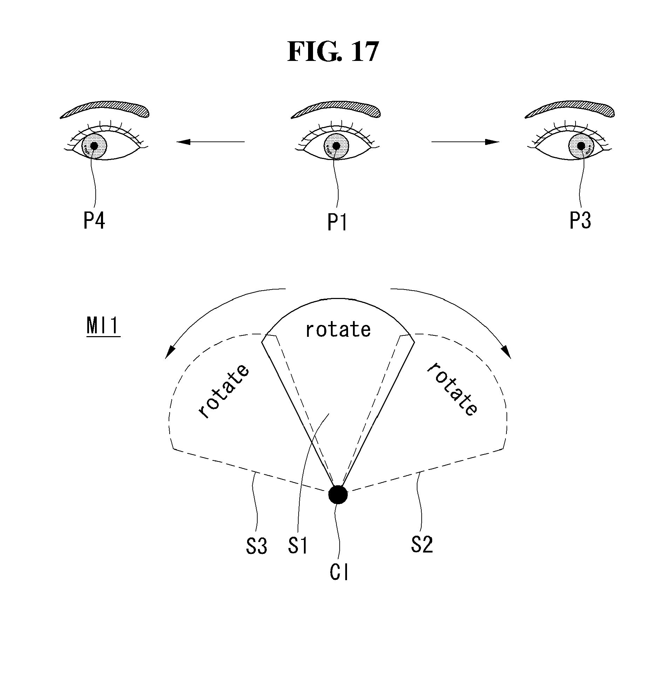

As shown in FIG. 17(a), the user can move the center of the pupil P from a first position P1 to a third position P3 to a fourth position P4. As shown in FIG. 17(b), if the position of the eye moves, the controller 180 can make the first menu MI1 rotate around the center icon CI in accordance with the movement. In other words, the first menu MI1 in a first state S1 is isolated to a second S2 to a third state S3 in response to the position of the eye. Since the first menu MI1 corresponding to the rotation function is rotated and then executed, the user can operate the mobile terminal 100 more intuitively.

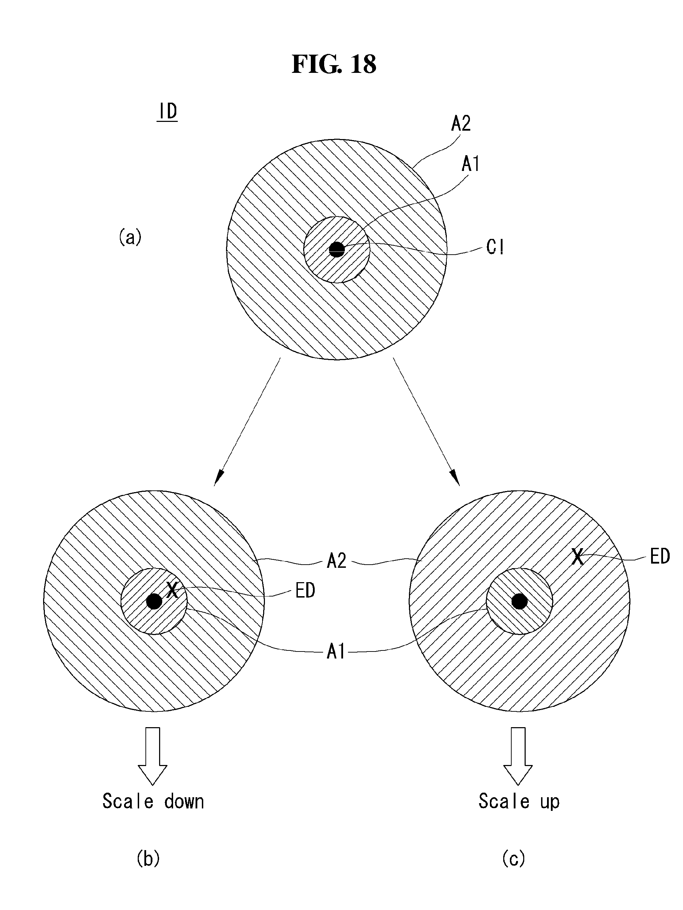

As shown in FIG. 18, the screen can be magnified or reduced through an eye gesture. As shown in FIG. 18(a), the controller 180 can display a guide screen ID capable of magnifying or reducing the screen in response to the first gesture of the user. For example, a first area A1 and a second area A2 can be disposed in the form of a concentric circle around the center icon CI.

As shown in FIG. 18(b), a gaze direction ED of the user can be located within the first area A1. If the gaze direction ED is located within the first area A1, the controller 180 can reduce and display an image displayed in the display 151.

As shown in FIG. 18(c), the gaze direction ED of the user can be located within the second area A2. If the gaze direction ED is located within the second area A2, the controller 180 can magnify and display an image displayed in the display 151. Because a gesture of viewing a particular area of a displayed guide screen ID can magnify or reduce a displayed image, magnification/reduction of the screen can be performed easily.

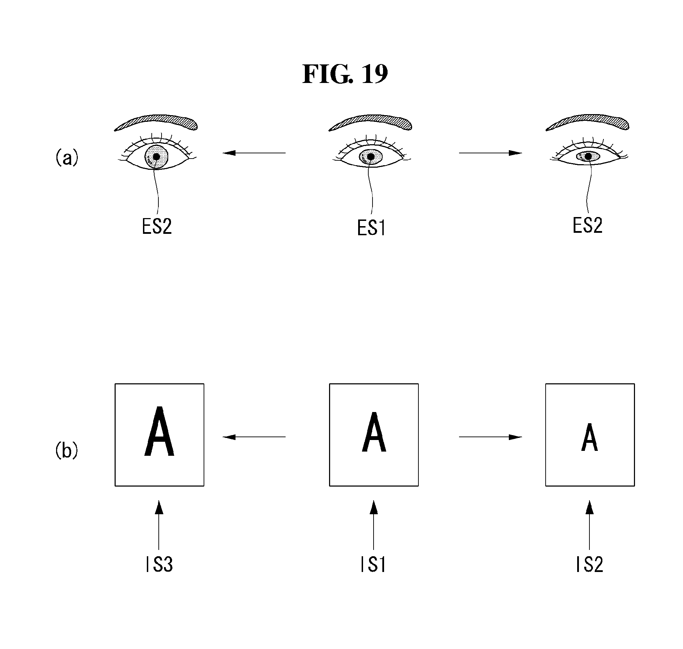

FIGS. 19 to 29 illustrate a control process by using various eye gestures in a mobile terminal of FIG. 5. As shown in the figures, the controller 180 according to one embodiment of the present invention can effectively control various functions of the mobile terminal 100 through various eye gestures.

As shown in FIG. 19(a), the user can make his or her eye remain in the first to third state (ES1 to ES3). The first state ES1 may correspond to the user opening his or her eyes in a normal manner; the second state ES2 may correspond to the user narrowing his or her eyes; and the third state ES3 may correspond to the user straining his or her eyes. The first to third state ES1 to ES3 may be captured by the camera 121.

As shown in FIG. 19(b), if an image is displayed in a first size IS1 in the first state ES1, the image can be displayed in a second size IS2 and a third size IS3 in the second ES2 and the third state ES3, respectively. In other words, the image size can be adjusted as largely as the user's eyes are opened.

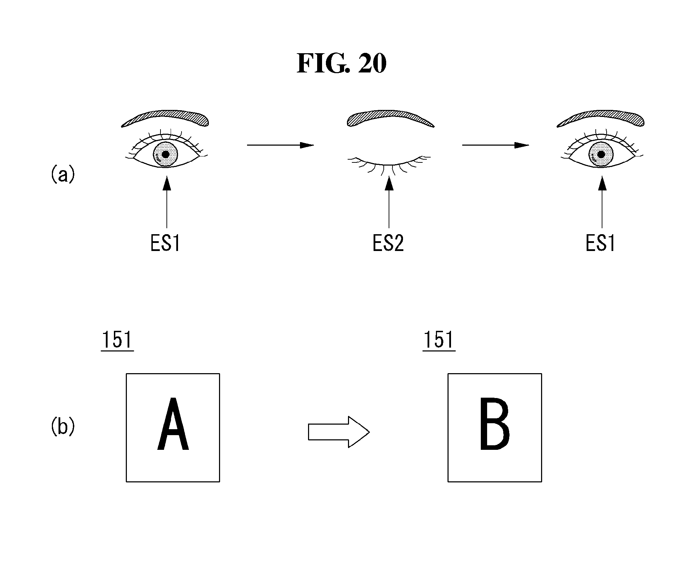

As shown in FIG. 20(a), the user can make his or her eyes remain in the first or second state ES1, ES2. In other words, the user can close and then open his or her eyes.

As shown in FIG. 20(b), if the user changes the state of his or her eyes from the first state ES1 to the second state ES2 and then to the first state ES1 again, the controller 180 can convert the image displayed on the display 151. For example, if an image gallery application is running, an image next to a currently displayed image can be displayed.

Switching from the first state ES1 to the second state ES2 may be performed multiple times within short time duration. In other words, a gesture of blinking eyes rapidly can be performed. If a gesture of blinking eyes rapidly is performed, the controller 180 may display a previous image of a currently displayed image or displaying images by skipping a predetermined number of images. Also, even a gesture of closing eyes for a relatively long time period may also make a particular function corresponding to the gesture performed.

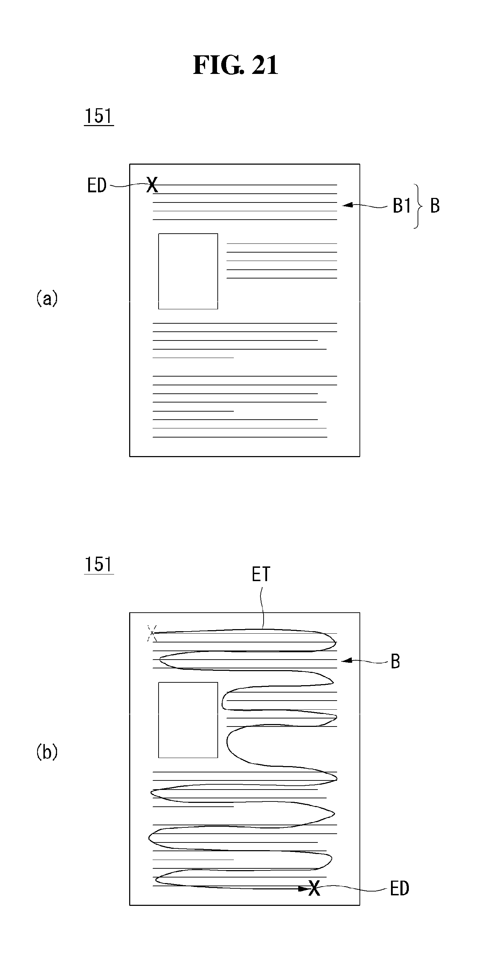

As shown in FIG. 21 (a), an e-book application B may be running. The e-book application B may be displaying a first page B1. The gaze direction ED of the user may point to an upper part of the first page B1. As shown in FIG. 21(b), as the user continues reading the first page B1, the gaze direction EB of the user may move toward a lower, right side of the first page B1 along the viewing trajectory ET of the user.

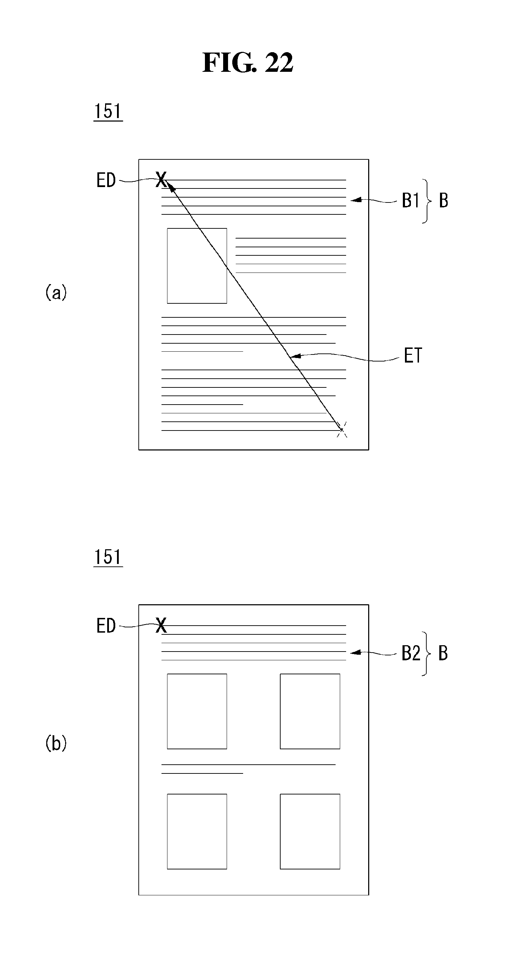

As shown in FIG. 22(a), if the user finishes reading the entire first page B1, the user may move the gaze direction ED again to an upper part of the first page B1. The viewing trajectory ET at this time may traverse the first page B1.

As shown in FIG. 22(b), the controller 180 displays a second page B2 if a change of the gaze direction ED described above is detected. The second page B2 may correspond to the page next to the first page B1. In other words, without particular operation by the user, the next page of the e-book is automatically displayed. Furthermore, the controller 180, according to the type of trajectory along which the gaze direction ED of the user is changed, may display the entire page of a currently displayed page or display predetermined units of pages by changing them at the same time.

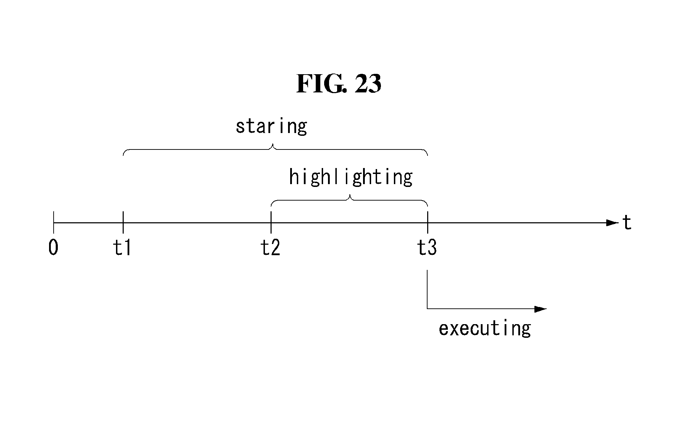

As shown in FIG. 23, the controller 180 according to one embodiment of the present invention may perform a function corresponding to the user staring at a particular area for more than a predetermined period of time. At this time, the controller 180, by displaying the particular area differently from the other parts, can allow the user to easily recognize the fact that the user is watching the particular area.

At the time point of t1, the user can view a particular area. Viewing the particular area may continue until t3. The controller 180 may perform a function corresponding to the particular area after a predetermined time period is passed since the user started viewing the particular area. Furthermore, the corresponding area may be highlighted after a predetermined time period is passed since the user started viewing the particular area as done at the time point of t2.

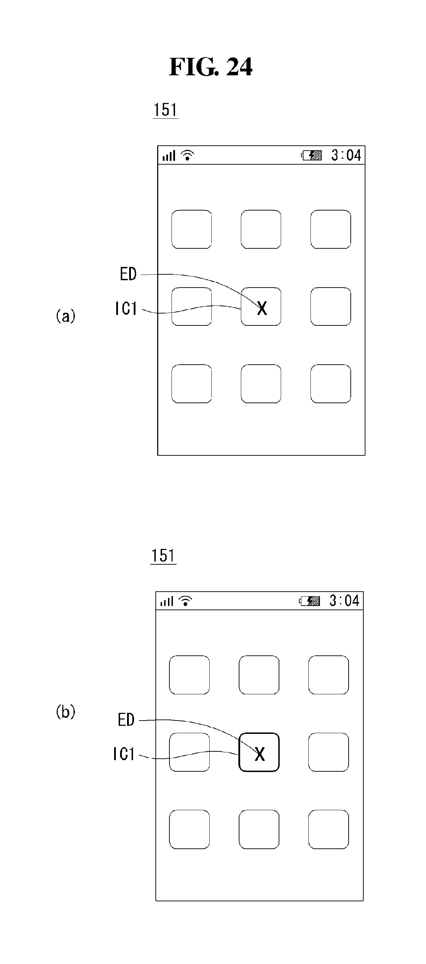

As shown in FIG. 24(a), a plurality of icons may be displayed on the display 151. The user may view a particular icon among the plurality of icons displayed. In other words, the gaze direction ED of the user may point toward a first icon IC1.

As shown in FIG. 24(b), if viewing the first icon IC1 last for more than a predetermined period of time, the controller 180 may display the first icon IC1 differently from the other icons. For example, the first icon IC1 may be image-processed to be highlighted or protruded.

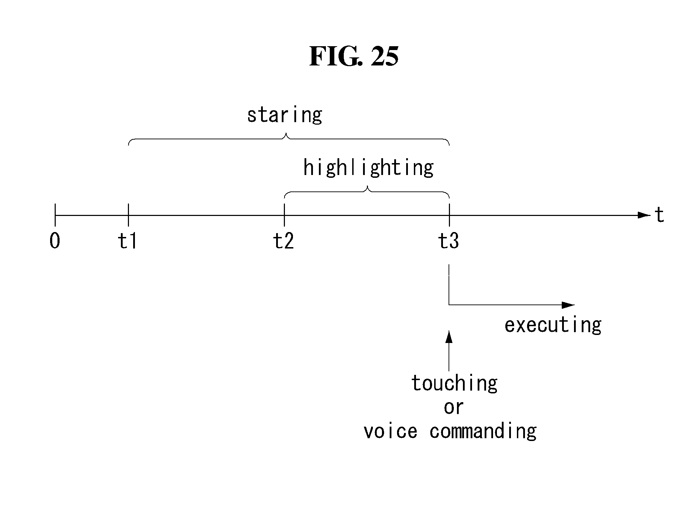

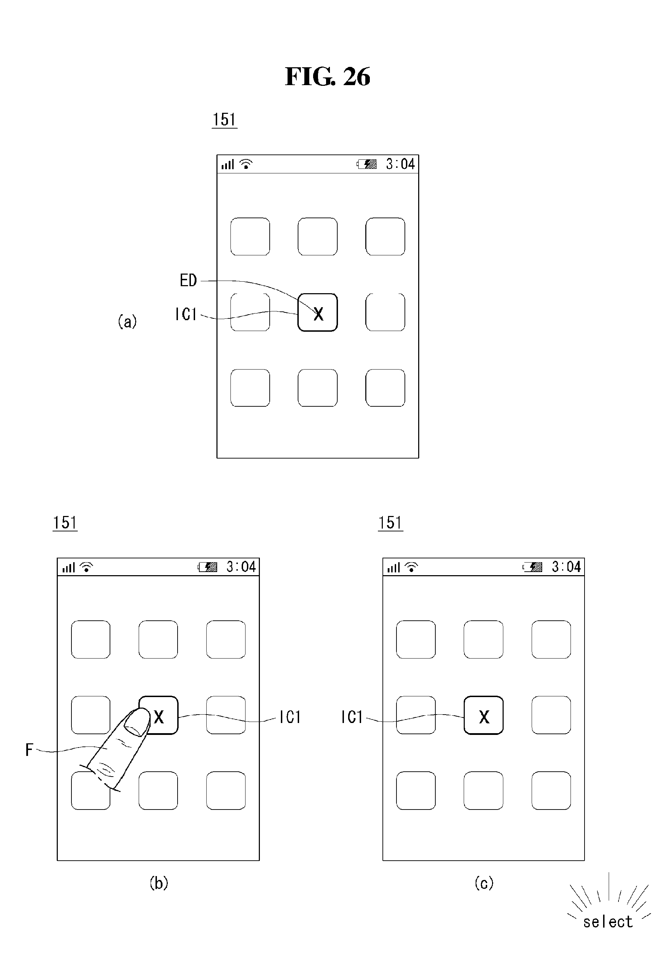

As shown in FIG. 25, a function corresponding to a particular area after the user has watched the particular area can be performed by an eye gesture but the function can also be performed through other ways rather than the eye gesture. For example, as the particular viewing area is highlighted, the user can recognize the particular area has been viewed; however, a function corresponding to the particular area may not necessarily be performed since the user's viewing the corresponding area reaches t3. The user is notified by the highlighting that the corresponding function can be selected and the corresponding function can be performed if the user touches the corresponding area or issues a voice command for selecting the function. As shown in FIG. 26(a), if the user's gaze direction ED points the first icon IC1, the controller 180 may display the first icon IC1 differently from the remaining icons.

As shown in FIG. 26(b), the user may select the first icon IC1, which may be highlight-processed, and perform an application corresponding to the first icon IC1.

As shown in FIG. 26(c), while the first icon IC1 is highlighted, the user may say "select". The user's voice may work as a voice command which carries out an application corresponding to the highlighted first icon IC 1.

By employing a selection method using an eye gesture and a selection method using other methods together, a particular item may be selected more accurately and conveniently.

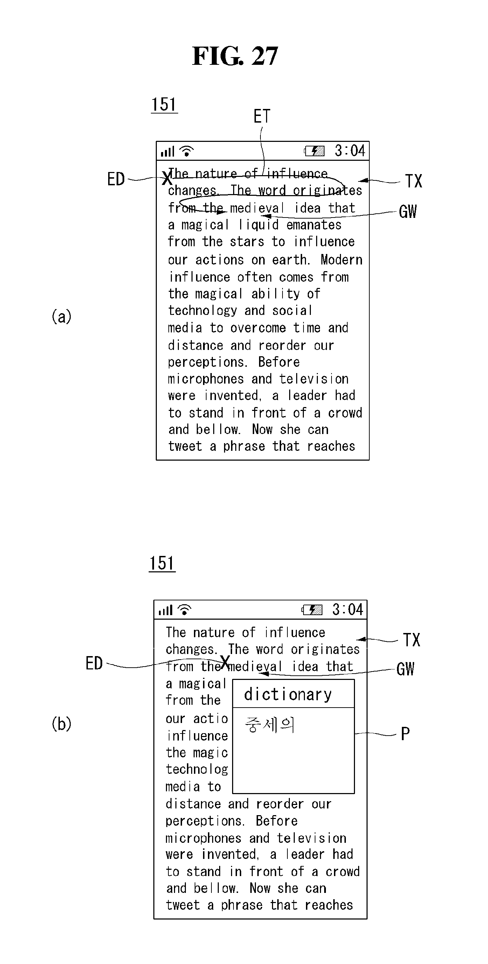

As shown in FIG. 27, the controller 180 according to one embodiment providing a function comparable to a first or a second gesture of the present invention can display a meaning of a particular word being gazed at.

As shown in FIG. 27(a), English contents TX may be displayed in the display 151. While examining the English contents TX, the user's gaze may dwell on a particular word GW for more than a predetermined period of time. In this case, the controller 180 may determine that the user is curious about the meaning of the word.

As shown in FIG. 27(b), if the user's gaze direction ED stays on a particular word GW for more than a predetermined period of time, the controller 180 may display a popup window displaying the meaning of the corresponding word. At this time, the meaning of the word displayed in the popup window P may be displayed in a language configured as a default language for the mobile terminal 100. For example, in case the default language of the mobile terminal 100 is Korean, the meaning of the word may be displayed in Korean.

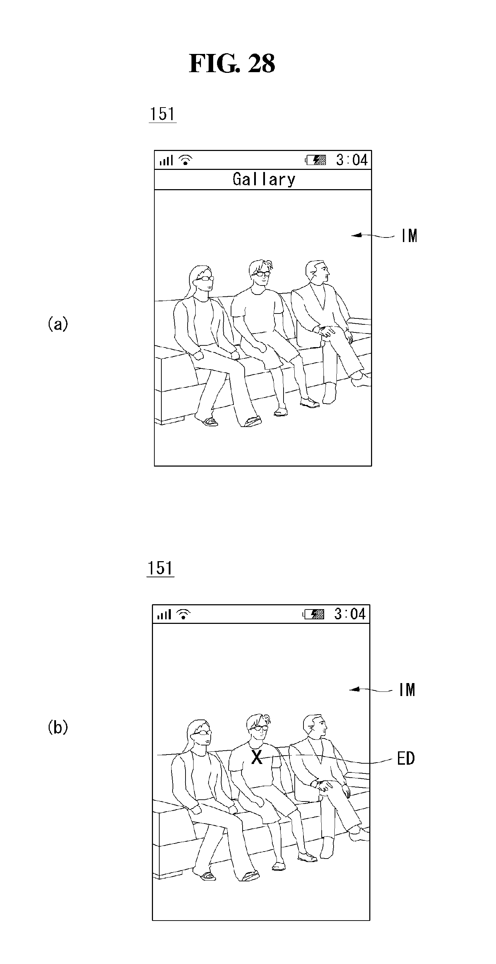

As shown in FIG. 28, the controller 180 according to one embodiment of the present invention can display information about a particular person being gazed at. As shown in FIG. 28(a), a photograph image IM may be displayed in the display 151. A plurality of people may be included in the photograph image IM.

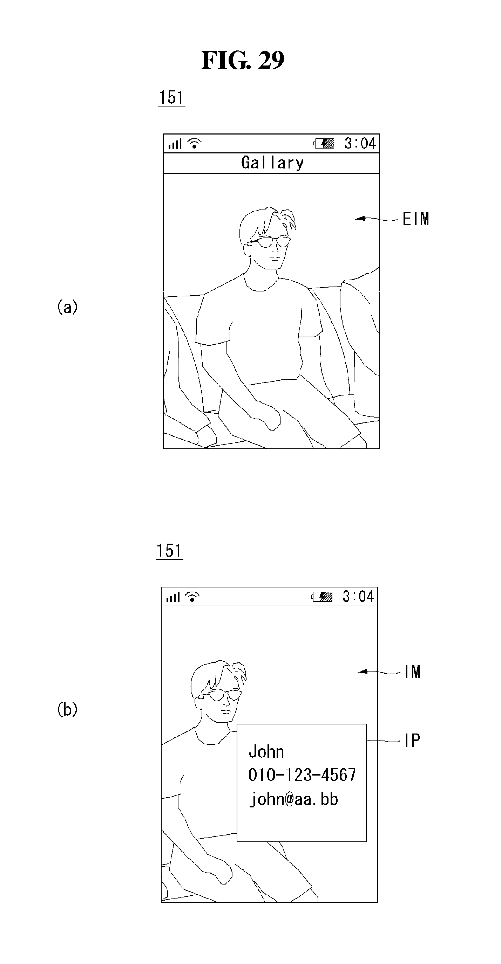

As shown in FIG. 28(b), the user may concentrate a gaze direction ED on a particular person among a plurality of people. As shown in FIG. 29(a), if a gaze direction ED is concentrated on a particular person, the controller 180 may display a magnified image EIM of the person. Therefore, the user can examine the corresponding person more closely.

As shown in FIG. 29(b), if a gaze direction ED is concentrated on a particular person, the controller 180 may display an information window IP about the person. For example, the name, phone number, email address, and the like of the corresponding person may be obtained from the memory 160 of the mobile terminal 100 and/or an external terminal and displayed.

After a first or a second gesture is generated, the user is supposed to recover his or her gaze direction to face the front for watching the screen. To this purpose, since the camera 121 recognizes a response of recovery after movement as a motion completing a gesture, a corresponding function can be performed. In other words, the user can check that the device has recognized a particular gesture and the corresponding function has been performed on the screen at the time of carrying out operation of gazing at the front

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal, comprising:
a camera configured to capture at least first and second eye gestures of a user using the mobile terminal;
a display; and
a controller configured to display on the display an eye tracking mode guide based on the captured first captured eye gesture and to select a particular function included in the eye tracking mode guide based on the captured second eye gesture.

2. The mobile terminal of claim 1, wherein the controller is further configured to only select the particular function when the second eye gesture is captured within a predetermined amount of time from the capturing of the first eye gesture.

3. The mobile terminal of claim 1 or 2, wherein the controller is further configured to determine a gaze direction based on at least one of the first and second captured eye gestures, and to display an indicator on the eye tracking mode guide indicating the determined gaze direction.

4. The mobile terminal as claimed in any one of claim 1 to 3, wherein the controller is configured to automatically enter an eye tracking mode for displaying the eye tracking mode guide from a touch mode for receiving touch inputs to perform functions.

5. The mobile terminal as claimed in any one of claims 1 to 4, wherein the controller is further configured to automatically enter the eye tracking mode based on at least one among temperature conditions, weather conditions, and executing application conditions.

6. The mobile terminal as claimed in any one of claims 1 to 5, wherein the first and second eye gestures include at least one of blinking of an eye, a gaze direction of the eye and a movement speed of the gaze direction.

7. The mobile terminal as claimed in any one of claims 1 to 6, wherein the first gesture includes the user blinking at least one of their eyes and wherein the second gesture includes the user changing a gaze direction of at least one of their eyes.

8. The mobile terminal as claimed in any one of claims 1 to 7, wherein the controller is further configured to select a first particular function displayed on a left portion of the eye tracking mode guide when the user gazes to a corresponding left direction, select a second particular function displayed on a right portion of the eye tracking mode guide when the user gazes to a corresponding right direction, select a third particular function displayed on an upper portion of the eye tracking mode guide when the user gazes to a corresponding upper direction, and select a fourth particular function displayed on a lower portion of the eye tracking mode guide when the user gazes to a corresponding lower direction.

9. The mobile terminal as claimed in any one of claims 1 to 8, wherein the controller is further configured to execute the selected particular function based on at least one of a voice input and a touch input or when the second eye gesture is captured.

10. A method of controlling a mobile terminal, the method comprising:
capturing, via a camera of the mobile terminal, at least first and second eye gestures of a user using the mobile terminal;
displaying, via a display of the mobile terminal, an eye tracking mode guide based on the captured first captured eye gesture; and
selecting, via a controller of the mobile terminal, a particular function included in the eye tracking mode guide based on the captured second eye gesture.

11. The method of claim 10, wherein the selecting step only selects the particular function when the second eye gesture is captured within a predetermined amount of time from the capturing of the first eye gesture.

12. The method of claim 10 or 11, further comprising:
determining, via the controller, a gaze direction based on at least one of the first and second captured eye gestures; and
displaying, via the display, an indicator on the eye tracking mode guide indicating the determined gaze direction.

13. The method as claimed in any one of claims 10 to 12, further comprising:
automatically entering, via the controller, an eye tracking mode for displaying the eye tracking mode guide from a touch mode for receiving touch inputs to perform functions.

14. The method as claimed in any one of claims 10 to 13, further comprising:
automatically entering, via the controller, the eye tracking mode based on at least one among temperature conditions, weather conditions, and executing application conditions.

15. The method as claimed in any one of claims 10 to 14, further comprising:
executing, via the controller, the selected particular function based on at least one of a voice input and a touch input or when the second eye gesture is captured.
